**Europäisches Patentamt**

**European Patent Office**

**Office européen des brevets**

(11) Numéro de publication: **0 221 310**
**B1**

# (12) FASCICULE DE BREVET EUROPEEN

(45) Date de publication du fascicule du brevet:
20.06.90

(51) Int. Cl.⁵: **C09D 5/34**, C09K 3/10

(21) Numéro de dépôt: 86112999.7

(22) Date de dépôt: 20.09.86

(54) Procédé pour la préparation, en récipients sous-vide séparés, du mastic en deux composants à utiliser en suite dans le stucage même automatique des dalles en marbre ou pierres en général.

(30) Priorité: 30.09.85 IT 8560185

(43) Date de publication de la demande:
13.05.87 Bulletin 87/20

(45) Mention de la délivrance du brevet:
20.06.90 Bulletin 90/25

(84) Etats contractants désignés:
AT DE FR GB IT

(56) Documents cités:
CH-A- 292 809
FR-A- 2 166 401
FR-A- 2 418 172
US-A- 4 195 001

(73) Titulaire: **TONCELLI, Marcello, Via Giovanni XXIII, 2,**
**I-36061 Bassano Del Grappa (Vicenza)(IT)**

(72) Inventeur: **TONCELLI, Marcello, Via Giovanni XXIII, 2,**
**I-36061 Bassano Del Grappa (Vicenza)(IT)**

(74) Mandataire: **Bettello, Luigi, Studio Tecnico Dott. Ing.**
**LUIGI BETTELLO Via Col d'Echele, 25,**
**I-36100 Vicenza(IT)**

## Description

Avec la présente invention on réalise un procédé, au moyen duquel sont préparés, dans des récipients sous vide distingués, les deux composants principaux du mastic, à utiliser dans le stucage des dalles de marbre ou pierres en général.

Il est connu qu'actuellement le stucage des dalles ou pierres en général ne peut pas être automatique à cause de la rapidité avec laquelle le mastic se durcit, avec le conséquent engorgement des diverses organes, ce qui comporte le blocage presque immédiat des machines automatiques de stucage.

Le stucage est pourtant réalisé à la main et la préparation du mastic est effectué en quantités minimales dans un récipient ou mieux sur la dalle même à traiter.

Durant la préparation le mastic englobe de l'air, qui tendra en suite à se libérer lentement, provocant, une fois que le mastic a été déjà enduit, des retraits ou des porosités du même mastic.

Dans FR-A 2 418 172 est décrit un produit pour la fixation de pièces de petites dimensions qui est obtenu à partir de deux composants, à savoir une résine fluide et un mélange d'une charge et du catalyseur durcissement de ladite résine. Ces deux composants sont mélangés avant l'usage à pression atmosphérique est pourtant même ce produit présente les défauts cités auparavant.

Le procédé selon l'invention consiste en ce qu'on prépare, entre des récipients sous vide séparément les deux composants du mastic, desquels le premier est composé principalement de résines pour exemple polyestères, un catalisateur du carbonate de calcium, gel de silice et/ou des autres éléments dans les pourcentages les plus opportuns; le second est composé principalement de résines pour exemple polyestères, accélérateur, carbonate de calcium, gel de silice et/ou des autres éléments dans les pourcentages les plus opportuns.

Les deux composants préparés en manière séparée entre eux ne présentent pas des problèmes d'indurcissement, dont ils peuvent être préparés dans les quantités désirées et les récipients en sont contenu, les tubulures et les appareils qui dosent, ne demandent pas un nettoyage constant et méthodique.

Rempli les récipients des diverses composants, on réalise le vide à l'intérieur d'eux et en suite est réalisé une mélange intime des mêmes, jusqu'à obtenir des composants homogènes.

Achevé le mélange, on porte à nouveau le récipient à pression atmosphérique et en suite, au moyen d'air comprimé, on élève la pression afin de favoriser l'écoulement des composants du mastic des mêmes.

Les deux composants ainsi préparés sont prêts à être versés sur la dalle, au moyen des soupapes de commande, qui interceptent les tubulures, qui des récipients vont à les dalles mêmes.

Versées en telle manière les quantités nécessaires pour stuquer la dalle, les composants sont mélangés pendant l'opération d'enduissage sur la même dalle, ce qu'on opère au moyen généralement de têtes roulantes porte-spatules.

Il est évité en telle manière de porter a contact, jusqu'au moment du stucage, les deux composants et par conséquence provoquer le rapide durcissement du mélange et de plus, ce qui est encore plus important, il est évité, au cours de la préparation, d'inglober de l'air, qui en suite peut tendre à se liberer, ce qui cause des retraits et des porosités du mastic desormais étalé.

Dans la table de dessins ci-jointe:

la fig. 1 représente un des réservoirs hermétiques de mélange, dans la vue schématique de coté sectionnée;

les figures 2 et 3 représentent deux variants différent dans le particulier relatif à la fermeture hermétique du récipient.

Le réservoir, constitué du conteneur 1 et du couvercle hermétique 2 est muni du mélangeur rotatif 3 commandé par le moteur électrique 4, des conduits respectivement pour l'aspiration de l'air 5 et pour l'introduction d'air comprimée 6. L'ouverture est obtenu au moyen du cylindre pneumatique 8.

L'air s'écoule par le conduit 7, tandis qu'on réalise le vide et, par le tube 13 arrive la décharge du composant directement sur la dalle en travail, par la soupape de commande 9.

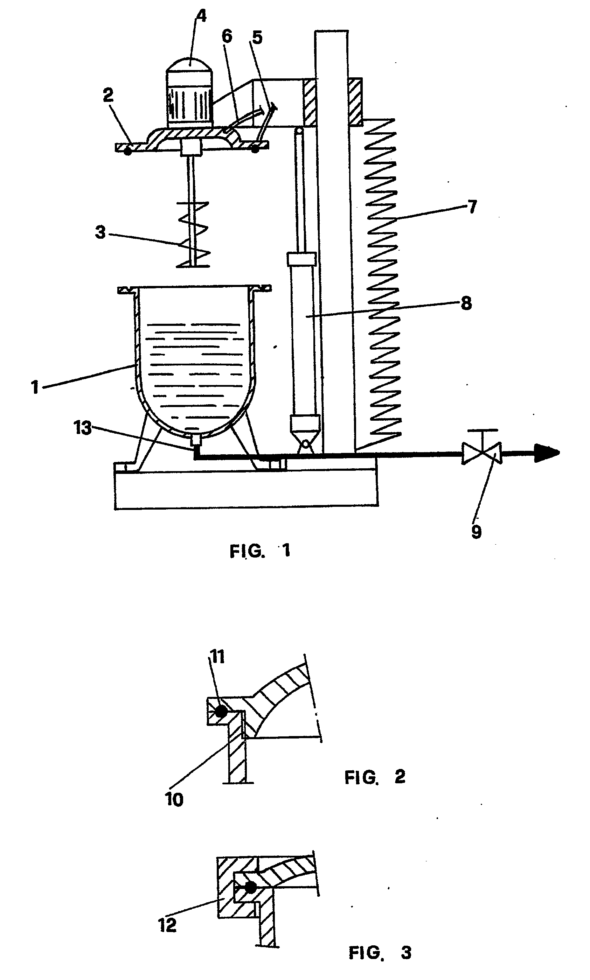

L'étanchéité entre le couvercle 2 et le conteneur 1 peut être réalisée en manières différentes, par exemple par un filettage 10 (fig. 2) avec une garniture 11 sur les flasques ou par des demi-bagues de prise 12 (fig. 3) réliées entre elles par une charnière et fermées par des moyens adéguats.

Sont évidents les avantages qu'on peut obtenir avec le procédé de l'invention, qui permet d'obtenir deux composants à mélanger dans un milieu sous vide et à conserver à l'état liquide sous air comprimée, composants qui sont en suite étendus séparément sur la dalle en travail pour donner lieu au produit final avec la tendance à l'indurcissement, exactement au moment où il est employé pour le stucage des dalles.

## Revendications

Procédé pour la préparation, en récipients sous vide séparés, du mastic en deux composants à utiliser en suite dans le stucage même automatique des dalles en marbre ou pierres en général, caractérisé en ce qu'en un premier récipient sont mélangés les combinés du composant qui contiennent la résine et l'accélérateur, tandis que dans le second sont mélangé les combinés du composant qui contiennent la résine et le catalisateur, tandis que l'opération de mélange est effectuée sous vide, en ambiance dépourvue d'air, ayant en suite entroduit de l'air comprimée, qui provoque l'écoulement des combinés seulement dans les quantités et au moment de l'usage, directement sur la dalle à stuquer, ce qui évite l'indurcissement prématuré du mastic et aussi d'inglober de l'air inévitable si le mélangement des chaques composants a lieu en présence de l'air.

## Claims

Process for the preparation, in separate receptacles under vacuum, of the two-component mastic to be used subsequently in stucco working, even automatically of paved flooring in marble or stones in general, characterized in that in a first receptacle the compounds of the component which contain the resin and the accelerator are mixed together whilst, in the second are mixed the compounds of the component containing resin and the catalyst whereas the mixing operation is done under vacuum, in an air-free environment, with compressed air being introduced afterwards, which causes the compounds to flow only in the quantities and at the instant of use, directly onto the paving to be stuccoed, which prevents premature hardening of the mastic and also the inclusion of air which is inevitable if the mixing of each of the components takes place in the presence of air.

## Patentansprüche

Verfahren zur Herstellung eines Zweikomponenten-Bindemittels in getrennten, unter Druck stehenden Behältern, wobei die Bindemittel nachfolgend für Stukkaturarbeiten, auch automatische Stukkaturarbeiten an Platten aus Marmor oder ganz allgemein aus Steinen verwendet werden, dadurch gekennzeichnet, daß in einem ersten Behälter (1) die Verbindungen derjenigen Komponente gemischt werden, welche das Harz und den Beschleuniger enthalten, während in dem zweiten Behälter die Verbindungen derjenigen Komponente gemischt werden, welche das Harz und den Katalysator enthalten, wobei der Mischvorgang unter Unterdruck, also in einer luftfreien Umgebung vollzogen wird und daß anschließend daran in die Mischung Druckluft eingeleitet wird, welche das Fließen der Verbindungen lediglich in den im Augenblick der Verwendung durch direktes Auftragen der zu stukkatierenden Platten erforderlichen Mengen hervorruft, was ein vorzeitiges Aushärten des Bindemittels und auch Lufteinschlüsse verhindert, die bei der Mischung einer jeden Komponente unter Lufteinwirkung unvermeidlich sind.

FIG. 1

FIG. 2

FIG. 3